# EUROPÄISCHE PATENTSCHRIFT

(11) **EP 1 900 955 B1**
(45) Veröffentlichungstag und Bekanntmachung des Hinweises auf die Patenterteilung: **10.11.2010**
(21) Anmeldenummer: 07112152.9
(22) Anmeldetag: 10.07.2007
(51) Int. Cl.: F16D 23/02

(54) **Synchronring**
Synchroniser ring
Anneau synchrone

(30) Priorität: 15.09.2006 EP 06120716
(43) Veröffentlichungstag der Anmeldung: 19.03.2008
(73) Patentinhaber: Sulzer Friction Systems (Germany) GmbH, 28719 Bremen (DE)
(72) Erfinder: Spreckels, Marcus, Dr., 28359, Bremen (DE)
(74) Vertreter: Sulzer Management AG

(56) Entgegenhaltungen:
- EP-A- 0 717 212
- DE-A1- 3 519 811
- DE-A1- 19 719 618
- DE-C1- 19 922 325
- US-A- 5 626 214

## Beschreibung

Die Erfindung betrifft einen Synchronring für eine Synchronisiereinrichtung eines schaltbaren Zahnräderwechselgetriebes sowie ein Schaltgetriebe für ein Fahrzeug gemäss dem Oberbegriff der unabhängigen Ansprüche 1 und 9.

Synchronringe dienen in einem mechanischen schaltbaren Zahnräderwechselgetriebe, z.B. in Fahrzeuggetrieben dazu, die während eines Gangwechsels auftretenden Relativgeschwindigkeiten zwischen Gangrad und Getriebewelle aneinander anzugleichen. Die Synchronisation wird dabei durch Reibung zwischen den entsprechenden Reibpartner erzielt. Die Funktionsweise solcher Getriebe und der Ablauf des Synchronisationsvorgangs sind an sich bekannt und brauchen dem Fachmann hier nicht mehr näher erläutert zu werden.

Zum Schutz gegen vorzeitigen Verschleiss und / oder zur Verbesserung der Reibcharakteristik ist es bekannt, die Reibflächen von Synchronringen, die in der Regel aus einem Metall oder einer Metallegierung, wie beispielsweise aus Messing oder Stahl gefertigt sind, mit einer Reibschicht zu versehen. Dabei sind ganz verschiedene Typen von Reibschichten im Gebrauch, z.B. thermische Spritzschichten aus Molybdän, Carbon-Reibschichten oder Reibschichten aus anderen Materialien.

In der DE 197 19 618 A1 ist ein Synchronring offenbart, der aus mehreren Einzelteilen zusammengesetzt ist und daher sehr aufwendig herzustellen ist. In der US 5,626,214 ist ein ebenfalls mehrteiliger Synchronring offenbart, welcher Blattfedern umfasst, die einer verbesserten Führung eines Synchronrings mit zylindrischer Aussenfläche dienen.

In der DE 35 19811 A1 ist ein Träger für einen konusförmigen Synchronring beschrieben, der einen drei geteilten äusseren Zahnkranzring aufweist und in einem zylindrischen Hohlraum einer Synchronringnabe, die häufig auch als Synchronringkörper bezeichnet wird, angeordnet ist und über Anschläge, die als Lappen ausgebildet sind, mit der Synchronringnabe im wesentlichen drehfest verankert ist. Im wesentlichen drehfest bedeutet dabei im Rahmen dieser Anmeldung, dass bis auf kleine Winkelauslenkungen in Umfangsrichtung der Synchronring drehfest mit der Synchronringnabe verbunden ist.

Die DE 198 53 856 A1 beschreibt eine Fortbildung des zuvor beschriebenen Synchronrings, wobei sich der Synchronring der DE 198 53 856 A1 dadurch auszeichnet, dass dessen Breite im wesentlichen nur durch die erforderliche Breite seiner Reibfläche bestimmt wird. Dies wird dadurch erreicht, dass ein Anschlag, die funktionell den Lappen gemäss DE 35 19811 A1 entsprechen, an oder nahe an einem Endabschnitt des Ringkörpers mit einem kleineren Konusdurchmesser angeordnet ist, sowie die Kontur des Anschlags in radialer Richtung über die Kontur der Aussenmantelfläche des Ringkörpers hervorsteht.

Beide Synchronringe sind zwar im Betriebszustand gegen eine Verdrehung gegenüber der Synchronringnabe durch die Lappen oder Anschläge im Prinzip gut gesichert, jedoch fehlt es beiden an einer zuverlässigen Führung in radialer Richtung im zylindrischen Hohlraum in der Synchronringnabe.

Das heisst, gegen eine Verdrehung in Umfangsrichtung in Bezug auf die Synchronringnabe sind die aus dem Stand der Technik bekannten Synchronring zwar gesichert, jedoch neigen diese Ringe aufgrund ihrer konischen äusseren Form, die mit einer zylindrischen inneren Kontaktfläche im zylindrischen Hohlraum der Synchronringnabe zusammenwirkt, verstärkt zu unkontrollierten Bewegungen, z.B. zu kleinen radialen Auslenkungen oder Kippbewegungen, die sich z.B. in unangenehmen Vibrationen äussern können, damit die Zuverlässigkeit und Genauigkeit des Synchronisationsvorgangs negativ beeinflussen, was zu einer Erhöhung der Schaltzeiten führen kann, zu schnellerem und erhöhtem Verschleiss der Reibfläche und des gesamten Synchronrings als solchem führt, und somit zu kürzeren Reparatur- und Wartungsintervallen führt, ganz abgesehen davon, dass durch die schlechte Führung des Synchronrings im Hohlraum der Synchronringnabe und den daraus resultierenden unkontrollierten Bewegungen der Schalt- und Fahrkomfort eines Kraftfahrzeugs deutlich eingeschränkt wird. Diese Effekte werden umso bedeutender, je mehr Leistung bzw. Drehmoment durch ein entsprechendes Getriebe geschaltet werden muss.

Die Aufgabe der Erfindung ist es daher, einen verbesserten Synchronring bereitzustellen, der besser in der Synchronringnabe geführt ist und bei dem im Betriebszustand keine unkontrollierten Relativbewegungen zwischen Synchronring und Synchronringnabe während und / oder ausserhalb des Synchronisationsvorgangs auftreten.

Die diese Aufgaben lösenden Gegenstände der Erfindung sind durch die Merkmale der unabhängigen Ansprüche 1 und 9 gekennzeichnet.

Die abhängigen Ansprüche beziehen sich auf besonders vorteilhafte Ausführungsformen der Erfindung.

Die Erfindung betrifft somit einen Synchronring für eine Synchronisiereinrichtung eines schaltbaren Zahnräderwechselgetriebes, umfassend einen konischen Ringkörper mit einer inneren Reibfläche und einer äusseren Einbaufläche, die den Ringkörper in einer radialen Umfangsrichtung jeweils begrenzen, und sich unter einem vorgebbaren Reibwinkel konisch um eine axiale Synchronringachse des Synchronrings erstrecken. Dabei ist der Ringkörper in axialer Richtung an einem grössten Konusdurchmesser durch eine im wesentlichen sich senkrecht zur Synchronringachse erstreckenden Zahnradfläche mit Zahnrad begrenzt, und an einem kleinsten Konusdurchmesser durch eine Nabenfläche begrenzt. Zur Fixierung des Synchronrings in einem zylindrischen Hohlraum einer Synchronringnabe ist eine Verdrehsicherung vorgesehen, die integral mit dem Ringkörper verbunden ist und sich von der Zahnradfläche des Ringkörpers in Richtung zur Nabenfläche erstreckt. Zur Führung der Einbaufläche ist an einer Innenfläche des zylindrischen Hohlraums der Synchronringnabe am Ringkörper in einem vorgebbaren Bereich zwischen der Zahnradfläche und der Nabenfläche ein Führungselement vorgesehen. Erfindungsgemäss ist der Synchronring ein aus einem tiefziehbaren Blech hergestelltes Blechumformteil.

Wesentlich für die Erfindung ist es, dass zur Abstützung bzw. Zentrierung und Führung der Einbaufläche an einer Innenfläche des zylindrischen Hohlraums der Synchronringnabe am Ringkörper in einem vorgebbaren Bereich zwischen der Zahnradfläche und der Nabenfläche ein Führungselement vorgesehen ist, das bevorzugt in Form von mehreren Ausbeulungen, die über die Einbaufläche in Umfangsrichtung verteilt sind, bereitgestellt wird.

Dadurch, dass zusätzlich zu den Führungselementen auch Verdrehsicherungen, bevorzugt in Form von Sicherungslaschen vorgesehen sind, ist ein erfindungsgemässer Synchronring gleichzeitig gegen eine Verdrehung gegenüber der Synchronringnabe durch die Verdrehsicherungen hervorragend gesichert, und ist gleichzeitig zuverlässig, insbesondere in Bezug auf die radiale Richtung im zylindrischen Hohlraum in der Synchronringnabe geführt und zentriert.

Das heisst, ein erfindungsgemässer Synchronring neigt aufgrund seiner konischen äusseren Form, die mit einen zylindrischen inneren Kontaktfläche im zylindrischen Hohlraum der Synchronringnabe zusammenwirkt, nicht mehr, wie die aus dem Stand der Technik bekannten konischen Synchronringe, zu unkontrollierten Bewegungen, z.B. zu kleinen radialen Auslenkungen oder Kippbewegungen, die sich z.B. in unangenehmen Vibrationen äussern können. Dadurch wird die Zuverlässigkeit und Genauigkeit des Synchronisationsvorgangs durch Verwendung eines erfindungsgemässen Synchronrings deutlich positiv beeinflusst, was zu einer Erniedrigung der Schaltzeiten betragen kann, den Verschleiss an der Reibfläche und des gesamten Synchronrings als solchem reduziert und somit zu längeren Reparatur- und Wartungsintervallen beiträgt, ganz abgesehen davon, dass durch die hervorragende Führung des erfindungsgemässen Synchronrings im Hohlraum der Synchronringnabe der Schalt- und Fahrkomfort eines Kraftfahrzeugs deutlich erhöht wird. Diese positiven Effekte wirken sich umso stärker aus, je mehr Leistung bzw. Drehmoment durch ein entsprechendes Getriebe geschaltet werden muss.

In einem speziellen Ausführungsbeispiel ist die Zahnradfläche durch eine Ausnehmung, insbesondere durch eine, oder zwei, oder drei, oder mehr als drei Ausnehmungen unterbrochen, und / oder die Verdrehsicherung ist in der Ausnehmung mit dem Ringkörper verbunden.

Dabei sind bevorzugt, aber nicht notwendig, ebenso viele Verdrehsicherungen wie Ausnehmungen in der Zahnradfläche vorgesehen. In einem für die Praxis besonders wichtigen Ausführungsbeispiel sind genau drei Verdrehsicherungen vorgesehen, die bei minimalem konstruktivem Aufwand ein Maximum an Verdrehsicherung garantieren.

Insbesondere kann die Verdrehsicherung als Sicherungslasche ausgebildet sein, die sich auf der der Synchronringachse abgewandten Seite des Ringkörpers im wesentlichen gleichgerichtet zur Einbaufläche erstreckt.

In einem ganz speziellen Ausführungsbeispiel kann die Sicherungslasche eine Sicherungslasche mit einer taschenförmigen Ausnehmung sein, wodurch im Einzelfall eine verbesserte Verankerung des Synchronrings in der Synchronringnabe erreichbar ist.

Die Zahl der Führungselemente, die an einem erfindungsgemässen Synchronring vorgesehen sein können, liegt bevorzugt zwischen zwei und neun Führungselementen, im Speziellen drei Führungselemente, wobei besonders bevorzugt sechs Führungselemente vorgesehen sind, und /oder jeweils zwei Führungselemente in Umfangsrichtung in im wesentlichen gleichem Abstand und / oder jeweils zwei Führungselemente zwischen zwei Verdrehsicherungen angeordnet sind, wodurch bei minimalem konstruktivem Aufwand ein Höchstmass an radialer Führung gewährleistbar ist.

Erfindungsgemäß ist das Führungselement in Form einer Ausbeulung des Ringkörpers an der Einbaufläche ausgebildet, welche Ausbeulung sich von der Synchronringachse radial weg nach aussen erstreckt.

Bevorzugt ist auf oder an der Reibfläche ein Verschleiss minderndes und /oder ein reibungsoptimiertes Reibungsmittel, insbesondere eine Reibbeschichtung, im speziellen eine Molybdänbeschichtung und / oder ein Reibbelag, insbesondere ein Carbon-Reibbelag und / oder ein anderes Reibungsmittel vorgesehen.

Konstruktiv ist der Synchronring ein aus einem tiefziehbaren Blech hergestelltes Blechumformteil und / oder aus einem Stahl, vorzugsweise aus C55, C80 oder C80M Stahl, insbesondere aus C35 oder C45 Stahl gefertigt.

Die Erfindung bezieht sich weiter auf ein Schaltgetriebe für ein Fahrzeug, insbesondere für einen Personenkraftwagen, einen Transporter oder einen Lastkraftwagen mit einem Synchronring nach einem der vorangehenden Ansprüche.

Im Folgenden wird die Erfindung an Hand der schematischen Zeichnung näher erläutert. Es zeigen :
- Fig. 1: ein Ausführungsbeispiel eines erfindungsgemässen Synchronrings im Schnitt;
- Fig. 2: eine Seitenansicht eines Synchronrings gemäss Fig. 1 im Einbauzustand;
- Fig. 3: eine andere Ansicht gemäss Fig. 2;

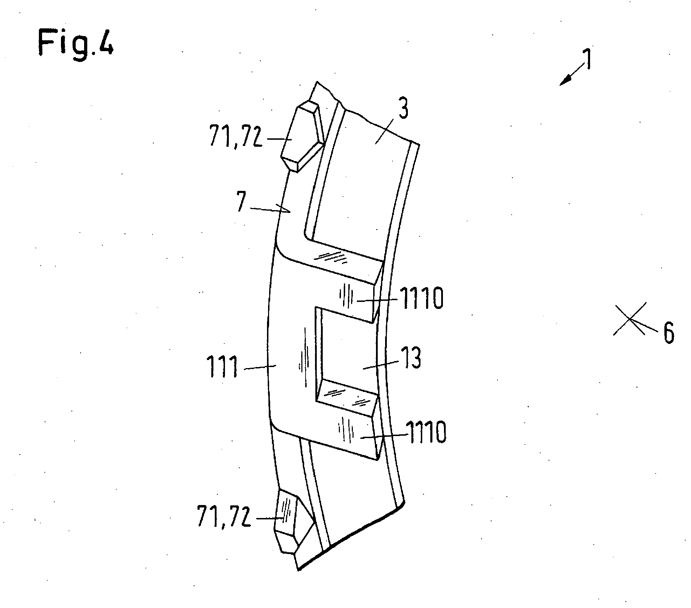

- Fig. 4: eine Sicherungslasche mit taschenförmiger Ausnehmung.

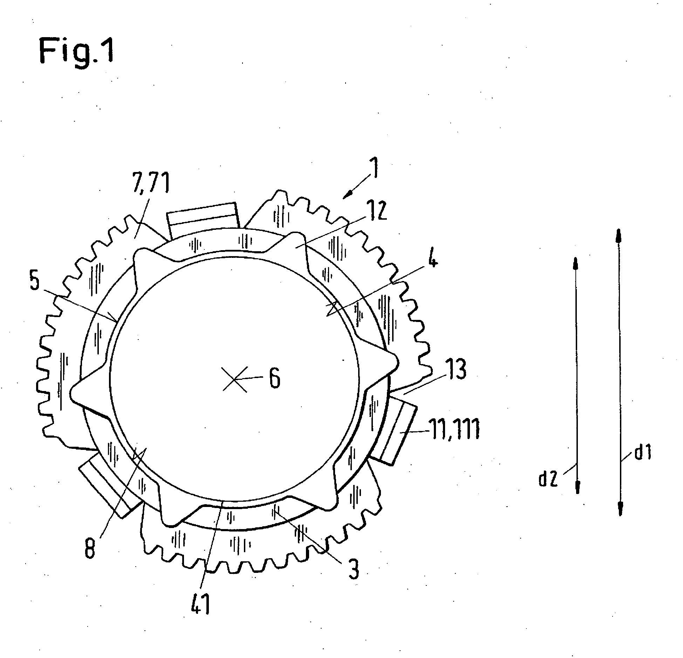

Fig. 1 zeigt in einer schematischen Darstellung im Schnitt ein Ausführungsbeispiel eines erfindungsgemässen Synchronrings, der im Folgenden gesamthaft mit dem Bezugszeichen 1 bezeichnet wird. Dabei bezeichnen gleiche Bezugszeichen in den verschiedenen Figuren technisch äquivalente Merkmale bzw. beziehen sich auf Merkmale mit technisch äquivalenter Funktion.

Der Synchronring 1 der Fig. 1 umfasst einen konischen Ringkörper 3 mit einer inneren Reibfläche 4 mit Carbon-Reibbelag 41 und einer äusseren Einbaufläche 5, die den Ringkörper 3 in einer radialen Umfangsrichtung in an sich bekannter Weise jeweils begrenzen. Die äussere Einbaufläche 5 und die innere Reibfläche 4 erstrecken sich im wesentlichen parallel zueinander unter einem vorgebbaren Reibwinkel α, der in Fig. 1 nicht zu sehen ist, konisch um eine axiale Synchronringachse 6 des Synchronrings 1.

Dabei ist der Ringkörper 3 in axialer Richtung an einem grössten Konusdurchmesser d1 durch eine im wesentlichen sich senkrecht zur Synchronringachse 6 erstreckenden Zahnradfläche 7 mit Zahnrad 71 begrenzt, und an einem kleinsten Konusdurchmesser d2 durch eine Nabenfläche 8 begrenzt. Zur Fixierung des Synchronrings 1 in einem zylindrischen Hohlraum 9 einer Synchronringnabe 10, die in Fig. 1 nicht dargestellt ist, ist eine Verdrehsicherung 11 vorgesehen, die integral mit dem Ringkörper 3 verbunden ist und sich von der Zahnradfläche 7 des Ringkörpers 3 in Richtung zur Nabenfläche 8 erstreckt, eine Konstruktion, wie sie im Prinzip aus dem Stand der Technik bereits bekannt ist. Dabei ist die Verdrehsicherung 11 gemäss Fig. 1 eine Sicherungslasche 111, die zum Beispiel bei der Herstellung des Synchronrings 1 durch Umbiegen eines vom Ringkörper 3 zunächst noch radial nach aussen stehenden Abschnitts in Richtung zur Einbaufläche 5 gebildet sein kann.

Das heisst, die Verdrehsicherung 11, die als Sicherungslasche 111 ausgebildet ist, erstreckt sich auf der der Synchronringachse 6 abgewandten Seite des Ringkörpers 3 im wesentlichen gleichgerichtet zur Einbaufläche 5.

Wie später anhand der nachfolgenden Figuren noch genauer erläutert werden wird, ist die Sicherungslasche 111 derart ausgebildet und in Bezug auf die Einbaufläche angeordnet, dass die Sicherungslasche 111 im Einbauzustand in einer entsprechenden Ausnehmung 101 der Synchronringnabe 10 verankerbar ist.

Erfindungsgemäss ist zur Führung der Einbaufläche 5 an einer Innenfläche 91 des zylindrischen Hohlraums 9 der Synchronringnabe 10, die wie gesagt in Fig. 1 nicht dargestellt ist, weil Fig. 1 den Synchronring 1 nicht im Einbauzustand zeigt, am Ringkörper 3 in einem vorgebbaren Bereich zwischen der Zahnradfläche 7 und der Nabenfläche 8 ein Führungselement 12 vorgesehen, das in dem für die Praxis enorm wichtigen Ausführungsbeispiel der Fig. 1 in Form einer Aushebung 12 des Ringkörpers 3 an der Einbaufläche 5 ausgebildet ist, wobei sich die Ausbeulung 12 von der Synchronringachse 6 radial weg nach aussen erstreckt.

Im Einbauzustand des Synchronrings 1 zentrieren und führen die erfindungsgemässen Ausbeulungen 12 dann den Synchronring 1 sicher und zuverlässig in dem in der Synchronringnabe 10 zur Aufnahme der Einbaufläche 5 vorgesehenen zylindrischen Hohlraum 9.

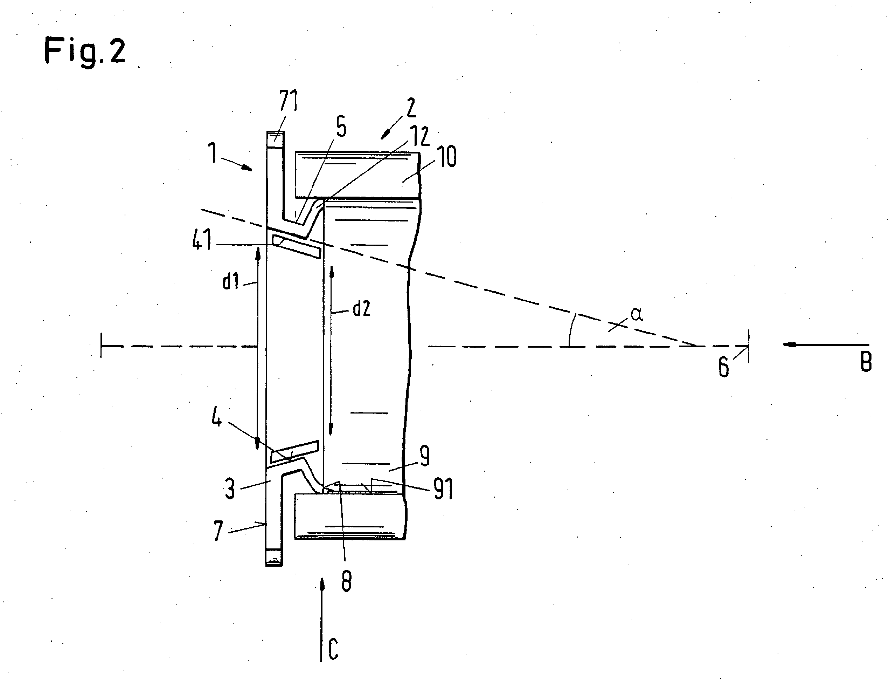

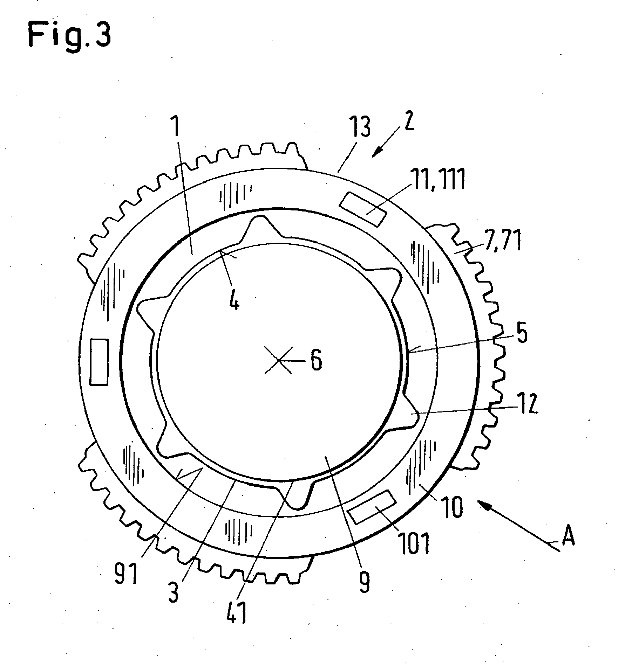

In Fig. 2 ist eine Seitenansicht eines Synchronrings 1 gemäss Fig. 1 im Einbauzustand schematisch dargestellt. Der Schnitt ist dabei entlang dem Pfeil A gemäss Fig. 3 gerade so gewählt, dass die Sicherungslasche 111 nicht zu sehen ist.

Der konische Ringkörper 3 mit seiner inneren Reibfläche 4, die im vorliegenden Beispiel einen Carbon-Reibbelag 41 aufweist, und der äusseren Einbaufläche 5, erstrecken sich unter dem Reibwinkel α konisch und im wesentlichen parallel zueinander um die axiale Synchronrigachse 6 des Synchronrings 1.

Der Synchronring 1 ist durch die erfindungsgemässen Führungselemente 12, die als Ausbeulungen 12 vorgesehen sind, mit der Einbaufläche 5 im Hohlraum 9 der Synchronringnabe 10 zentriert gelagert.

Die Zahnradfläche 7 mit Zahnrad 71 befindet sich in an sich bekannter Weise ausserhalb der Synchronringnabe 10, so dass das Zahnrad 71 mit einem weiteren, in Fig. 2 nicht gezeigten Zahnrad eines ebenfalls nicht gezeigten schaltbaren Zahnräderwechselgetriebes in drehfesten Eingriff treten kann.

In Fig. 3 ist schliesslich wieder der Synchronring der Fig. 1 aus einer Richtung B gemäss Fig. 2 in einem Schnitt entlang und an der Stelle C, wie sie durch den Pfeil C in Fig. 2 näher bezeichnet ist.

In Fig. 3 ist besonders gut zu sehen, wie zur Fixierung des Synchronrings 1 im zylindrischen Hohlraum 9 der Synchronringnabe 10, die Verdrehsicherung 11, die integral mit dem Ringkörper 3 verbunden ist und sich von der Zahnradfläche 7 des Ringkörpers 3 in Richtung zur Nabenfläche 8 erstreckt, und wie bereits erwähnt eine Sicherungslasche 111 ist, in der Ausnehmung 101 der Synchronringnabe 10 verankert ist. Durch die Verankerung der Sicherungslasche 111 in der Ausnehmung 101 der Synchronringnabe 10 ist der Synchronring 1, abgesehen von kleinen Winkeln, gegen eine Verdrehung um die Synchronringachse 6 zuverlässig gesichert. Dabei sind jedoch aus technischen Gründen, die dem Fachmann hinlänglich bekannt sind, bevorzugt kleine Verdrehbewegungen des Synchronrings 1 um die Synchronringachse 6 zuzulassen. Das wird dadurch erreicht, dass die Ausnehmungen 101 in Umfangsrichtung etwas breiter sind als die Sicherungslaschen 111.

In Fg. 4 ist schliesslich ein anderes spezielles Ausführungsbeispiel der vorliegenden Erfindung in schematischer Weise dargestellt, wobei die Verdrehsicherung 11 eine Sicherungslasche 111 ist, die als Sicherungslasche 1110 mit taschenförmigen Ausnehmungen ausgestaltet ist, so dass diese in einer entsprechenden Ausnehmung einer anderen Synchronringnabe 10 verankert werden können, wobei die Ausnehmungen zur Verankerung der Sicherungslaschen 1110 der anderen Synchronringnabe 10 dann entsprechend z.B. zweiteilig mit einem mittleren Steg ausgebildet sind, wodurch in bestimmten Fällen eine bessere Fixierung des Synchronrings 1 an der Synchronringnabe 10 möglich ist.

Es versteht sich, dass alle in dieser Anmeldung explizit diskutierten Ausführungsbeispiele nur exemplarisch für die Erfindung zu verstehen sind.

## Patentansprüche

1. Synchronring für eine Synchronisiereinrichtung (2) eines schaltbaren Zahnräderwechselgetriebes, umfassend einen konischen Ringkörper (3) mit einer inneren Reibfläche (4) und einer äusseren Einbaufläche (5), die den Ringkörper (3) in einer radialen Umfangsrichtung jeweils begrenzen, und sich unter einem vorgebbaren Reibwinkel (α) konisch um eine axiale Synchronringachse (6) des Synchronrings erstrecken, wobei der Ringkörper (3) in axialer Richtung an einem grössten Konusdurchmesser (d1) durch eine im wesentlichen sich senkrecht zur Synchronringachse (6) erstreckenden Zahnradfläche (7) mit Zahnrad (71) begrenzt ist, und an einem kleinsten Konusdurchmesser (d2) durch eine Nabenfläche (8) begrenzt ist, und zur Fixierung des Synchronrings in einem zylindrischen Hohlraum (9) einer Synchronringnabe (10) eine Verdrehsicherung (11) vorgesehen ist, die integral mit dem Ringkörper (3) verbunden ist und sich von der Zahnradfläche (7) des Ringkörpers (3) in Richtung zur Nabenfläche (8) erstreckt, wobei zur Führung der Einbaufläche (5) an einer Innenfläche (91) des zylindrischen Hohlraums (9) der Synchronringnabe (10) am Ringkörper (3) in einem vorgebbaren Bereich zwischen der Zahnradfläche (7) und der Nabenfläche (8) ein Führungselement (12) vorgesehen ist, **dadurch gekennzeichnet, dass** das Führungselement (12) in Form einer Ausbeulung (12) des Ringkörpers (3) an der Einbaufläche (5) ausgebildet ist, welche Ausbeulung (12) sich von der Synchronringachse (6) radial weg nach aussen erstreckt und der Synchronring ein aus einem tiefziehbaren Blech hergestelltes Blechumformteil ist.

2. Synchronring nach Anspruch 1, wobei die Zahnradfläche (7) durch eine Ausnehmung (13), insbesondere durch eine, oder zwei, oder drei, oder mehr als drei Ausnehmungen (13) unterbrochen ist, und / oder die Verdrehsicherung (11) in der Ausnehmung (13) mit dem Ringkörper (3) verbunden ist.

3. Synchronring nach einem der Ansprüche 1 oder 2, wobei ebenso viele Verdrehsicherungen (11) wie Ausnehmungen (13) in der Zahnradfläche (7), insbesondere genau drei Verdrehsicherungen (11) vorgesehen sind.

4. Synchronring nach einem der vorangehenden Ansprüche, wobei die Verdrehsicherung (11) als Sicherungslasche (111) ausgebildet ist, die sich auf der der Synchronringachse (6) abgewandten Seite des Ringkörpers (3) im wesentlichen gleichgerichtet zur Einbaufläche (5) erstreckt.

5. Synchronring nach einem der vorangehenden Ansprüche, wobei die Sicherungslasche (111) eine Sicherungslasche (1110) mit einer taschenförmigen Ausnehmung ist.

6. Synchronring nach einem der vorangehenden Ansprüche, wobei zwischen zwei und neun Führungselemente (12), im Speziellen drei Führungselemente (12), bevorzugt sechs Führungselemente (12) vorgesehen sind, wobei besonders bevorzugt jeweils zwei Führungselemente (12) in Umfangsrichtung in im wesentlichen gleichem Abstand und / oder jeweils zwei Führungselemente (12) zwischen zwei Verdrehsicherungen (11, 111) angeordnet sind.

7. Synchronring nach einem der vorangehenden Ansprüche, wobei auf der Reibfläche (4) ein Verschleiss minderndes und / oder ein reibungsoptimiertes Reibungsmittel (41), insbesondere eine Reibbeschichtung (41), im speziellen eine Molybdänbeschichtung (41) und / oder ein Reibbelag (41), insbesondere ein Carbon-Reibbelag (41) und / oder ein anderes Reibungsmittel (41) vorgesehen ist.

8. Synchronring nach einem der vorangehenden Ansprüche, wobei der Synchronring aus einem Stahl, vorzugsweise aus C55, C80 oder C80M Stahl, insbesondere aus C35 oder C45 Stahl gefertigt ist.

9. Schaltgetriebe für ein Fahrzeug, insbesondere für einen Personenkraftwagen, einen Transporter oder eine Lastkraftwagen mit einem Synchronring (1) nach einem der vorangehenden Ansprüche.

## Claims

1. A synchroniser ring for a synchronising device (2) of a switchable gear changing transmission including a conical ring body (3) having an inner friction surface (4) and an outer installation surface (5) which each bound the ring body (3) in a radial peripheral direction and extend conically at a presettable friction angle (α) about an axial synchroniser ring axis (6) of the synchroniser ring, wherein the ring body (3) is bounded in the axial direction at a largest cone diameter (d1) by a gear surface (7) with gear (71) and extending substantially perpendicular to the synchroniser ring axis (6) and is bounded at a smallest conical diameter (d2) by a hub surface (8) and, to fix the synchroniser ring in a cylindrical hollow space (9) of a synchroniser ring hub (10), a security against rotation (11) is provided which is integrally connected to the ring body (3) and extends from the gear surface (7) of the ring body (3) in the direction towards the hub surface (8), wherein a guide element (12) is provided for the guidance of the installation surface (5) at an inner surface (91) of the cylindrical hollow space (9) of the synchroniser ring hub (10) at the ring body (3) in a presettable region between the gear surface (7) and the hub surface (8), **characterised in that** the guide element (12) is configured in the form of an indentation (12) of the ring body (3) at the installation surface (5), which indentation (12) extends radially outwardly away from the synchroniser ring axis (6) and the synchroniser ring is a shaped sheet metal part manufactured from a deep-drawable sheet metal

2. A synchroniser ring in accordance with claim 1, wherein the gear surface (7) is interrupted by a cut-out (13), in particular by one, or two, or three, or more than three cut-outs (13); and/or the security against rotation (11) is connected to the ring body (3) in the cut-out (13).

3. A synchroniser ring in accordance with one of the claims 1 or 2, wherein just as many securities against rotation (11) are provided as cut-outs (13) in the gear surface (7), in particular precisely three securities against rotation (11).

4. A synchroniser ring in accordance with any one of the preceding claims, wherein the security against rotation (11) is configured as a securing lug (111) which extends on the side of the ring body (3) remote from the synchroniser ring axis (6) substantially directed the same towards the installation surface (5).

5. A synchroniser ring in accordance with any one of the preceding claims, wherein the securing lug (111) is a securing lug (1110) having a pocket-like cut-out.

6. A synchroniser ring in accordance with any one of the preceding claims, wherein between two and nine guide elements (12), specifically three guide elements (12), preferably six guide elements (12) are provided, with particularly preferably in each case two guide element (12) being arranged at substantially the same interval in the peripheral direction and/or in each case two guide members (12) being arranged between two securities against rotation (11, 111).

7. A synchroniser ring in accordance with any one of the preceding claims, wherein a wear reducing and/or a friction optimised friction means (41), in particular a friction coating (41), specifically a molybdenum coating (41) and/or a friction layer (41), in particular a carbon friction layer (41) and/or another friction means (41) is provided on the friction surface (4).

8. A synchroniser ring in accordance with any one of the preceding claims, wherein the synchroniser ring is produced from a steel, preferably from C55, C80 or C80M steel, in particular from C35 or C45 steel.

9. A shift transmission for a vehicle, in particular for a passenger car, a transporter or a truck, having a synchroniser ring (1) in accordance with any one of the preceding claims.

## Revendications

1. Anneau synchrone pour un dispositif de synchronisation (2) d'une boîte de vitesses à roues dentées embrayable, comportant un corps annulaire (3) conique avec une surface de frottement (4) intérieure et une surface d'encastrement (5) extérieure, qui délimitent chacune le corps annulaire (3) dans une direction circonférentielle radiale et s'étendent sous forme conique avec un angle de frottement (α) prédéfinissable autour d'un axe (6) axial de l'anneau synchrone, le corps annulaire (3) étant limité dans la direction axiale à un diamètre de cône maximum (d1) par une surface (7) avec roue dentée (71), orientée sensiblement perpendiculairement à l'axe (6) de l'anneau synchrone, et à un diamètre de cône minimum (d2) par une surface de moyeu (8), et pour fixer l'anneau synchrone dans une cavité (9) cylindrique d'un moyeu (10) de l'anneau synchrone, il est prévu un élément anti-rotation (11) qui est relié intégralement au corps annulaire (3) et s'étend depuis la surface en roue dentée (7) du corps annulaire (3) vers la surface de moyeu (8), sachant que pour le guidage de la surface d'encastrement (5) sur une face intérieure (91) de la cavité (9) cylindrique du moyeu (10) de l'anneau synchrone, il est prévu un élément de guidage (12) sur le corps annulaire (3) dans une zone prédéfinissable entre la surface en roue dentée (7) et la surface de moyeu (8), **caractérisé en ce que** l'élément de guidage (12) est réalisé sous la forme d'un bossage (12) du corps annulaire (3) sur la surface d'encastrement (5), lequel bossage (12) s'étend vers l'extérieur en s'écartant radialement de l'axe (6) de l'anneau synchrone, et l'anneau synchrone est une pièce façonnée en tôle, réalisée dans une tôle emboutissable.

2. Anneau synchrone selon la revendication 1, dans lequel la surface en roue dentée (7) est interrompue par un évidement (13), en particulier par un, ou deux, ou trois, ou plus de trois évidements (13), et/ou l'élément anti-rotation (11) est relié au corps annulaire (3) dans l'évidement (13).

3. Anneau synchrone selon la revendication 1 ou 2, dans lequel il est prévu autant d'éléments anti-rotation (11) que d'évidements (13) dans la surface en roue dentée (7), en particulier exactement trois éléments anti-rotation (11).

4. Anneau synchrone selon l'une quelconque des revendications précédentes, dans lequel l'élément anti-rotation (11) est réalisé sous forme de patte de blocage (111), qui s'étend sur le côté du corps annulaire (3), détourné de l'axe (6), sensiblement parallèlement à la surface d'encastrement (5).

5. Anneau synchrone selon l'une quelconque des revendications précédentes, dans lequel la patte de blocage (111) est une patte de blocage (1110) avec un évidement en forme de poche.

6. Anneau synchrone selon l'une quelconque des revendications précédentes, dans lequel il est prévu entre deux et neuf éléments de guidage (12), en particulier trois éléments de guidage (12), de préférence six éléments de guidage (12), sachant que, en particulier, de préférence respectivement deux éléments de guidage (12) sont disposés dans le sens périphérique sensiblement à même distance et/ou respectivement deux éléments de guidage (12) sont disposés entre deux éléments anti-rotation (11, 111).

7. Anneau synchrone selon l'une quelconque des revendications précédentes, dans lequel sur la surface de frottement (4) il est prévu un moyen de friction (41), diminuant l'usure et/ou optimisé en usure, en particulier un revêtement de friction (41), spécialement un revêtement de molybdène (41) et/ou une garniture de friction (41), en particulier une garniture de friction au carbone (41) et/ou un autre moyen de friction (41).

8. Anneau synchrone selon l'une quelconque des revendications précédentes, dans lequel l'anneau synchrone est réalisé en acier, de préférence en acier C55, C80 ou C80M, en particulier en acier C35 ou C45.

9. Boîte de vitesses pour un véhicule, en particulier pour un véhicule de tourisme, un véhicule de transport ou un camion, comportant un anneau synchrone (1) selon l'une quelconque des revendications précédentes.
